Europäisches Patentamt

European Patent Office

Office européen des brevets

(11) Publication number: 0 213 709
A1

## (12) EUROPEAN PATENT APPLICATION

(21) Application number: 86305541.4

(22) Date of filing: 18.07.86

(51) Int. Cl.⁴: A23P 1/00 , B65B 3/32 , B65B 37/20 , B65G 53/46

(30) Priority: 20.07.85 GB 8518363

(43) Date of publication of application:
11.03.87 Bulletin 87/11

(84) Designated Contracting States:
DE FR GB IT NL

(71) Applicant: APPLE ENGINEERING LIMITED
Unit 8 Bright Street Industrial Estate
Hull North Humberside, HU3 4UW(GB)

(72) Inventor: Smith, Steven
94, Ellerker Rise
Willerby North Humberside(GB)
Inventor: Frazer, Andrew Ian
21 Suffolk Street Beverly Road
Hull North Humberside(GB)

(74) Representative: Ranson, Arthur Terence et al
W.P. Thompson & Co. Coopers Building
Church Street
Liverpool L1 3AB(GB)

(54) A depositor for use in dispensing food products.

(57) A depositor for a flowable product comprising a two position valve (37,39,47) which in a first position controls the flow of product from a hopper (53) to a dispensing cylinder (29) and in a second position from the dispensing cylinder (29) to an outlet (46). Actuator means (83) switch the valve (37,39,47) between the first and second positons, and a plunger disposed in the dispensing cylinder (29) is synchronised with it to alternately draw the product into dispensing cylinder and expel it from the dispensing cylinder to the outlet. The plunger is reciprocated by a double ended piston and cylinder assembly - (13,17,19), one end (17) of the double ended piston - (17) being secured to the plunger to actuate same, and the other end (19) carrying actuating means - (99) which is co-operable with at least one switch means (101,103) to control at least the stroke of the plunger.

Fig. 1

## "A DEPOSITOR FOR USE IN DISPENSING FOOD PRODUCTS"

The present invention relates to a depositor which has a particular application in the food industry where a discrete quantity of flowable material is required to be dispensed from a hopper containing a quantity of the material.

A known depositor utilises a single ended pneumatic cylinder whose piston rod controls a plunger for dispensing material from a hopper. In the known depositor the stroke of the piston is controlled by switches which are operated off the piston rod. The arrangement puts undue side loading on the piston rod which can lead to seal failure. Furthermore, the piston area of the cylinder is unequal with a single ended cylinder, and unequal loading on the piston can adversely affect the positioning of the cylinder and hence the plunger especially during start-up.

It is an aim of the present invention to provide a depositor which overcomes the aforementioned difficulties. It is a further aim to provide a depositor which is of simpler construction and which can be easily dismantled for cleaning purposes and reassembled by semi-skilled machine operators.

According to the present invention then there is provided a depositor for a flowable product comprising a two position valve which in a first position controls the flow of product from a hopper to a dispensing cylinder and in a second position from the dispensing cylinder to an outlet, means for switching the valve between the first and second positions, and a plunger disposed in the dispensing cylinder, characterised in that the plunger is reciprocated by a double ended piston and cylinder assembly, one end of the double ended piston being secured to the plunger to actuate same, and the other end carrying actuating means which is co-operable with at least one switch means to control at least the stroke of the plunger.

The switch means controlling the stroke of the double ended piston and cylinder assembly and hence the plunger is mounted on an axially moveable assembly. The assembly comprises a nut member which is preferably carried on two parallel threaded bars, one of which is rotatable by means of an actuating handle and the other is rotated in synchronism by means of a chain and sprocket drive or gear wheels. This arrangement enables the switch means to be securely mounted adjacent the axis of the piston rod of the double ended piston and cylinder assembly whereby actuation of the switch means does not impose undue side loading on the piston rod and hence on the piston seals. A resiliently biased friction washer is carried by one of the threaded bars to serve as an anti-rotation means to locate the stroke switch in the selected position.

The actuating means preferably comprises a circular flange secured to the piston rod at the end thereof. The means for switching the two position valve comprises a further piston and cylinder assembly -preferably of the single ended type. The piston rod of the said further piston and cylinder assembly carries an actuating member which is co-operable with trip valve switch means synchronising movement of the two position valve to that of the double ended piston and cylinder assembly.

The cylinder of the double ended piston and cylinder assembly is located in a way which allows movement relative to a frame on which it is mounted. The mounting retains it axially whilst allowing restricted end float of say ten thousandths of an inch and also permits the cylinder to float in a plane perpendicular to the axis of the piston rod by say ten to fifteen thousandths of an inch. This ensures that the cylinder is able to align itself with the piston to avoid undesirable excessive side loading and thus ensure maximum working life from the piston seals.

The double ended piston and cylinder assembly is accommodated within the frame, and the valve body of the two position valve is carried on one or more mounting members projecting from the frame. Preferably, the mounting members comprise two struts which are disposed substantially parallel to the axis of the dispensing cylinder. The position of the dispensing cylinder is determined by its co-operating engagement with the valve body which is preferably by way of a spigot arrangement. The position of the dispensing cylinder determines the position of the cylinder of the double ended piston and cylinder assembly which as previously indicated is mounted for limited float with respect to the frame and in particular for movement in a plane perpendicular to the axis of the plunger and dispensing cylinder. This mounting arrangement ensures that alignment of the plunger and the double ended piston does not cause excessive loading of the plunger and piston seals and it allows the two position valve and plunger assembly to be dismantled in a straight forward fashion. Because the double ended piston has two piston rods, the piston area at each end is equal so the piston always comes to rest in its end position without the need for spring biasing.

The hopper is releasibly connected to the valve body. To ensure that the two position valve does not operate when the hopper is removed an interlock is provided which deactivates the two position valve actuating means when the hopper is removed. Conveniently, the interlock comprises a spring loaded plunger and an associated isolating switch.

The valve body comprises a stepped bore which is open at one end to receive a rotatably movable valve member. Locating means is provided to position the valve member axially in the bore.

According to a second aspect of the present invention there is provided a dispensing head valve comprising a housing having a stepped diameter bore, which receives slidably therein a stepped diameter valve member which is movable between first and second positions, corresponding to open and closed positions of the valve, characterised in that in the open position an inlet passageway in a small diameter portion of the housing communicates with an outlet passageway in the valve member by way of an orifice in a wall of the valve member, and wherein during movement of the valve member to its closed position, the orifice communicates with the larger diameter bore to thereby generate a suction force within the valve.

The invention will now be described further, by way of example only, with reference to the accompanying drawings; in which:-

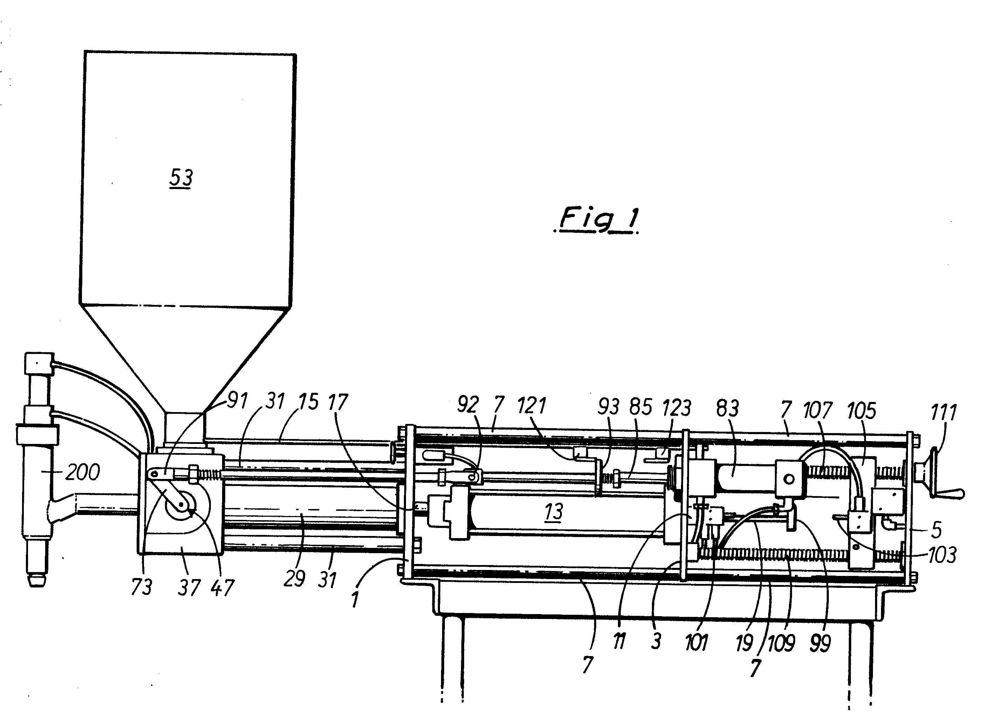

Fig. 1 is a side view of the apparatus according to the present invention;

Fig. 2 is an exploded perspective view of the rotary valve of the apparatus of Fig. 1;

Fig. 3 is a cross-sectional view of the rotary valve and dispensing head of Fig. 1;

Fig. 4 is a cross-sectional view of the rotary valve in its other position, and

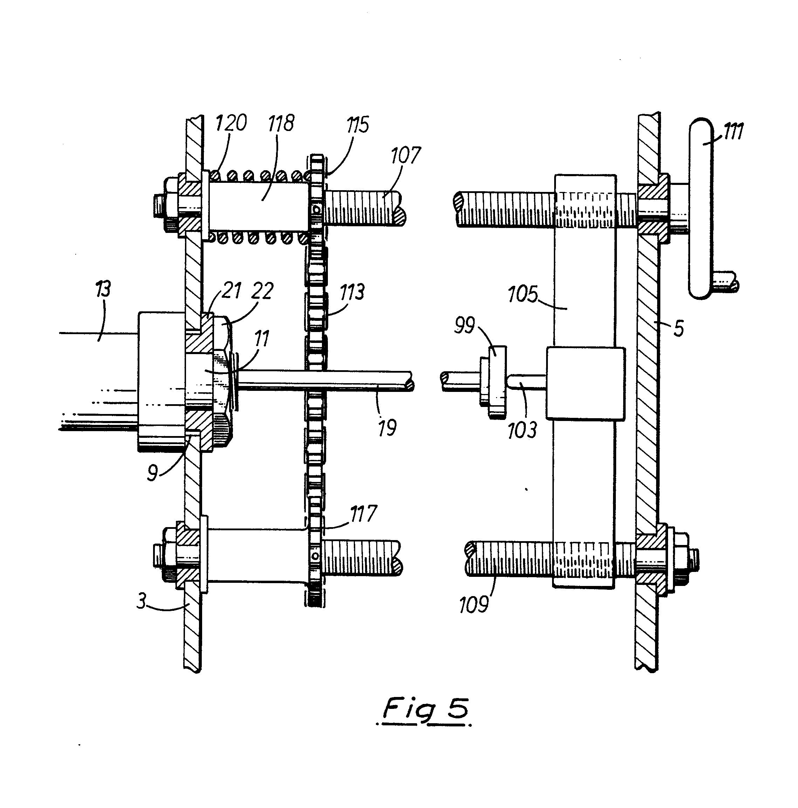

Fig. 5 is a detail cross-sectional view axially broken showing the drive mechanism for the nut member and showing the location means for the main actuating cylinder.

Referring to the drawings of the depositor, there is shown a frame comprising three generally square shaped wall members 1,3,5 which are secured together in spaced apart relation by longitudinal struts 7. Eight longitudinal struts are provided in the illustrated embodiment. The eight struts are secured to the middle wall member 3 with four struts projecting from each side of the wall and having a respective one of the end wall members 1,5 secured thereto. The struts are disposed in the corners of the wall members.

The middle wall member has bore 9 therein which receives the end 11 of an actuating cylinder 13 which accommodates a piston of the double ended type having piston rods 17 and 19. By means of a flanged sleeve 21 which passes through the bore 9 with circumferential clearance of ten to fifteen thousandths of an inch, and a nut 22, the actuating cylinder 13 is restrained axially relative to the middle wall 3. The sleeve 21 is approximately ten thousandths of an inch longer than the thickness of the middle wall member, this allows limited axial end float and the circumferential clearance allows limited movement in a direction perpendicular to the axis of the cylinder, i.e. in a plane parallel to the plane of the middle wall 3. Some tilt of the cylinder is thus permitted.

The end wall member 1 has a through bore 25 which is substantially coaxial with the bore 9. The bore 25 receives snugly the end 27 of a dispensing cylinder 29 so that the cylinder is located with respect to the end wall 1.

Secured to the end wall 1 and projecting therefrom in a direction away from the middle wall 3 are two mounting members 31 which are disposed radially outwardly of the bore 25 and substantially diametrically opposed. The mounting members have reduced diameter ends 33 which are adapted to be received in respective bores in a valve body 37 of a two position valve. The valve body has a through bore 39 machined therein from one face 41 thereof and a through bore 43 disposed at right angles thereto and intersecting with the bore 39. A further bore 45 is also formed in the valve body at right angles to the bores 39 and 43 and intersecting with the bore 39. The bore 39 is of stepped diameter and accommodates a rotary valve member 47. The bore 43 is counter-bored at the face 49 to receive the other end of the plunger cylinder 29. The bore 45 is counter bored at face 42 to receive the nozzle 51 of a feed hopper 53. A locking ring 55 is provided for securing the hopper to the valve body. The bore 43 emerges from the face 44 of the valve body as the outlet for the product to be dispensed.

The ends of the mounting members 31 are threaded to receive threaded knurled nuts 57 for securing the valve body to the frame. An end closure plate 48 incorporating an outlet orifice 46 is received on the ends of the mounting members 31 and interposed between the valve body and the knurled nuts 57. As a safety feature, the end closure plate 48 is provided with an elongate recess 150 which is engaged by a shouldered pin 151 which is screwed into the face 44 of the valve body. To release the end closure plate from cooperating engagement with the shouldered pin, it has to be moved in the plane of the plate. This is only possible after releasing the knurled nuts and sliding the valve body along the mounting members 31 to free them from engagement with the plate. This movement of the valve body opperates an isolation device described further hereinbelow.

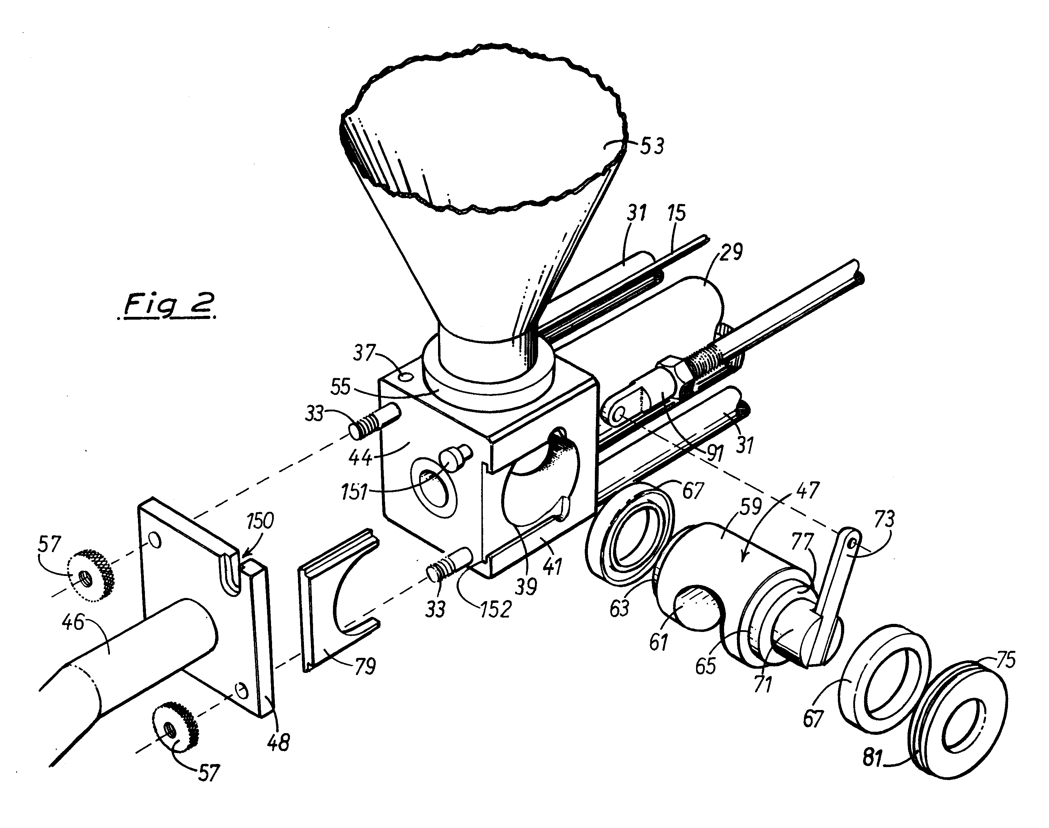

The rotary valve member 47, shown in more detail in Fig. 2, comprises a central cylindrical portion 59 which has an arcuate recess 61 therein penetrating the cylindrical surface. The opposite ends of the valve member are reduced in diameter with first shoulders 63,65 carrying respective sealing members 67. A further reduced diameter portion 69 is dimensioned to be received in the bore 39' in the valve body. At the opposite end of the valve member is a longer reduced diameter portion 71 which is arranged to project from the valve body and have secured thereto an actuating crank 73. The rotary valve member 47 is located in the bore 39 by means of a locating washer 75 and a co-operating C-shaped retaining plate 79. The washer 75 abuts a shoulder 77 of the valve member between the portions 65 and 71, and has a circumferential recess 81 which receives the complimentary part of the C-shaped retaining plate 79. This retaining plate is received in a recess 152 in the valve body and is held in place by the end closure plate 48.

A valve actuating cylinder 83 is secured to the middle wall member 3 and the piston rod 85 extends therefrom through a bore 87 in the middle wall 3 and a bore 89 in the end wall 1 and connects with the actuating crank 73 by way of a pinned joint 91. Preferably, the piston rod 85 is broken along its length at a joint 92 to facilitate easy dismantling of the valve assembly and conveniently the joint allows pivotal movement of the two parts of the piston rod. The piston rod 85 carries a circular flange 93 which serves as an actuating member for trip valve switch means whose function and operation will be described further hereinafter.

Reverting now to the description of the actuating cylinder 13 and associated parts. The piston rod 17 is adapted to be secured to a plunger (not shown) which is received for sliding movement within the dispensing cylinder 29. The plunger carries two axially spaced apart seals to seal off the valve side of the plunger cylinder from the actuating cylinder side and thereby prevent leakage of the material to be dispensed. The plunger is secured to the piston of the actuating cylinder 13 so that it follows the movement of the actuating cylinder piston. The movement of the actuating piston and hence the plunger is in synchronism with the actuation of the rotary valve member.

The piston rod 19 also extends from the opposite end of the actuating cylinder 13 and carries at its end a circular actuating flange 99 which is adapted to operate switch means 101 and 103. The switch means 101 is conveniently mounted on the middle wall member 3 whilst the switch means 103 is mounted on a movable nut member 105. The movable nut member is carried on two parallel, spaced apart, threaded bars 107,109 with which the nut member engages threadingly. The threaded bars 107,109 are journalled for rotation at opposite ends in the middle wall member 3 and the other end wall member 5. One of the threaded bars is provided with an actuating wheel 111 for rotating the bar and by means of a chain 113 and respective sprockets 115 and 117 mounted on and keyed to the respective threaded bars 107,109, both bars are rotated by rotation of the actuating wheel 111. This gives rise to movement of the nut member 105 in a direction parallel to the axis of the piston rod 19. The threaded bars 107 and 109 are disposed so that a plane passing between the two bars also passes through the axis of the piston rod 19. Preferably, the two bars are disposed vertically -one above the other. At least one of the bars is provided with friction locking means comprising a coil spring 120 carried by the bar 107 and loading a flanged sleeved washer 118 which takes its abutment on the middle wall. The flanged sleeved washer is pinned to the sprocket 115 for rotation therewith and is preferably made of nylon. The bars 107 and 109 are located in plain bearings received in bores in the wall members. Thus, the bar 107 is loaded to resist accidental rotation thereof for example by vibrational forces. Further trip valve switch means 121,123 are mounted in the frame and adapted for operation by the flange 93. The operation of the depositor will be described further hereinbelow.

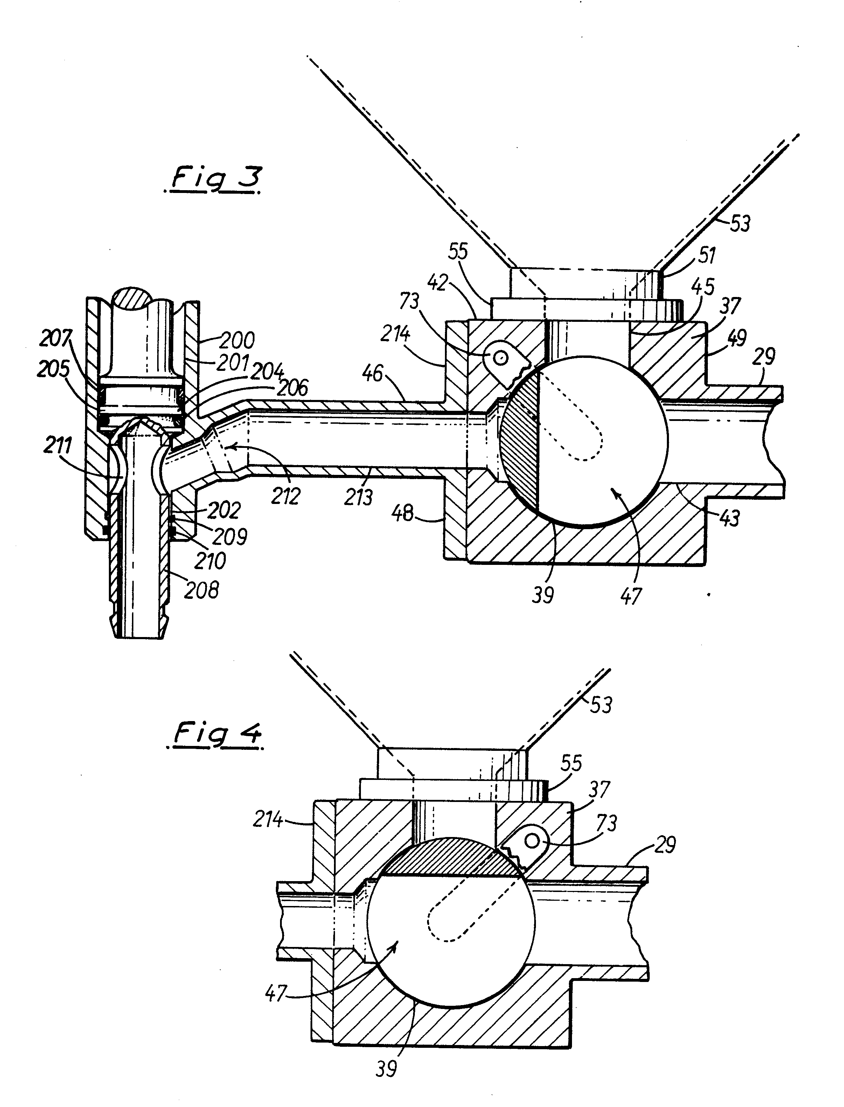

The rotary valve member controls communication of the hopper, containing the material to be dispensed, with the dispensing cylinder in one position, and comunication of the dispensing cylinder 29 with the outlet orifice 46 in its other position. The valve is rotatable through 90°. With the rotary valve member 47 in its first position, (Fig.3) the material can flow from the hopper to the dispensing cylinder. The material is drawn into the dispensing cylinder as the plunger 95 is withdrawn along the dispensing cylinder towards the actuating cylinder by applying pressure to one side of the actuating cylinder piston 15. Withdrawal of the plunger 29 ceases when the actuating flange 99 contacts the switch means 103. This signals the main valve to close off the air supply to the left hand chamber of the actuating cylinder 13 and to apply air to the valve actuating cylinder 83 to move it to the right as viewed in the illustration. This changes over the position of the rotary valve member 47 (see Fig.4) and in so doing the piston rod 85 moves to the right until the actuating flange 93 contacts the trip valve switch means 123. This then closes off the air supply to the valve actuating cylinder 83 and signals for air to be applied to the right hand chamber (as viewed in the illustration) of the plunger actuating cylinder 13 so that the piston 15 and hence the plunger 29 move to the left and material is dispensed from the outlet nozzle. The piston continues to move until the acutating flange 99 contacts the switch means 101 when the air supply to the actuating cylinder 13 is closed off -and air is then applied to the valve actuating cylinder 83 to move it leftwards as viewed in the drawings and so change over the position of the rotary valve member 47. The air is closed off when the actuating flange 93 contacts the trip valve switch means 121 which resets the air valves. ready to receive a signal for another cycle to commence. Such a signal may be from a manually operated switch positioned in any convenient location or in response to some automatic sequencing signal. The machine stops with the rotary valve in its first position, and the main cylinder in its withdrawn position. In this position the machine is ready to accept a start signal which causes the above described cycle to occur.

It will be appreciated that the switch means control the application of air by way of pilot controlled main air valves. Alternative valving arrangements may be utilised. The actuating means has been described with reference to pneumatics but it will be appreciated that hydraulics may be preferable in certain circumstances. The wiring and piping for the air valves has been omitted from the drawings for reasons of clarity.

It is to be preferred that safety interlocks be provided to prevent operation of the device in partially dismantled conditions. For example, when the hopper is removed, operation of the valve could be potentially dangerous, and a spring loaded plunger 15 is provided which extends from within the frame and is arranged to normally contact the neck of the hopper above a locking ring 55 locating the hopper 53 in position. In this position a switch is actuated which allows operation of the air valves and particularly oscillation of the valve actuating cylinder. When this locking ring is removed, for example during servicing, the plunger automatically moves into a position which isolates operation of the valves. The desribed isolating switch also comes into operation when removing the end closure plate of the valve body as described earlier as this requires the valve body to move forward. Hence the plunger 15 is actuated to isolate machine operation. The machine cannot be restarted until a main reset switch has been operated.

The construction of the valve assembly has the advantage that it is easy to dismantle and assemble by semi-skilled operators/maintenance personel. Thus, it will be appreciated that dismantling of the two position valve for cleaning purposes is simply achieved by first, disconnecting the actuating crank 73, releasing the knurled nuts holding the valve body and end closure plate in position, sliding forward the valve body to permit release of the end closure plate and then sliding out the C-shaped locking plate whereafter the rotary valve member 47 can be withdrawn from the valve body for cleaning purposes or replacement of the seals. Furthermore, the valve body can be slid off the mounting members 31 to allow the dispensing cylinder to be removed for servicing and maintenance of the plunger.

This ease of dismantling contrasts with the complicated procedures required with known depositors.

A further feature, according to another aspect, is the provision of a dispensing head with a suck-back outlet to avoid dribbling of product on closure of the dispensing head valve. The dispensing head is provided with an end closure plate for fixing to the valve body of the depositor, described earlier.

The dispensing head valve comprises a housing having a stepped diameter bore, which receives slidably therein a stepped diameter valve member which is movable by actuating means, between first and second positions, corresponding to open and closed positions of the valve, in the open position an inlet passageway in a small diameter portion of the housing communicates with an outlet passageway in the valve member by way of an orifice in a wall of the valve member, and wherein during movement of the valve member to its closed position, the orifice communicates with the larger diameter bore to thereby generate a suction force within the valve.

The suction force arises as a result of a chamber being formed between the larger bore in the housing and the smaller diameter of the valve member on movement of the valve member from the open position. The product being dispensed is thus sucked back, and by the simple means of a stepped valve member, dribbling of the product is avoided.

Referring now to Fig. 3 there is shown a cross-sectional view of a dispensing head with suck-back outlet. The head is shown in its dispensing position. The actuating mechanism has been omitted for convenience.

The dispensing head comprises a housing 200 having a stepped bore with two different diameters identified by reference numerals 201,202. The stepped bore receives slidably therein a stepped diameter movable valve member 204. A larger diameter portion 205 thereof engages co-operatingly with the bore 201 and is sealed with respect thereto by sealing and bearing slide rings 206, 207 respectively. The portion 205 tapers to a smaller diameter tubular portion 208 which is sealed with respect to the bore 202 by sealing and bearing rings 209,210 respectively. The wall of the tubular portion 208 has an orifice 211 therein which forms a passage for product to be dispensed. In the illustration opposite sides of the tubular wall are provided with an orifice. This simplifies the assembly of the movable valve member and prevents it from being inserted in a way which would be inoperable.

The housing bore 202 has an inlet opening 212 in the outer wall thereof for the introduction of product by way of a communicating passageway 213 which terminates with a flange 214 which serves as the end closure plate of a two position valve of a depositor as described earlier.

The movable valve member 204 is moved slidably in the housing by actuating means, typically a pneumatic cylinder, to which it is secured at its upper end by way of a transverse coupling pin. The valve member is movable between first and second positions which correspond respectively to a dispensing position and a non-dispensing position, i.e. open and closed positions. The valve is illustrated in its open position, in which the orifice 211 in the tubular member is aligned with the inlet 212 in the housing. In this position product entering the dispensing head from a depositor by way of the passageway 213 is dispensed from the open end of the tubular portion 208. This projects from the bore 202 in the housing.

On moving of the valve member to its closed position, upwardly in the illustration, the solid wall of the tubular portion closes off the inlet passageway 213 and this prevents further dispensing. However, the nature of typical products which are dispensed is such that they undergo a certain compression during their passage from the depositor and this can give rise to expansion of the product when the constraining forces are removed and as a result dribbling of product from the dispensing head occurs rather than a clean cut off.

In order to avoid this, the described dispensing head has a stepped diameter valve member, whereby -upon closure of the valve a larger area of chamber is opened up by communication of the small diameter bore 202 with the large diameter bore 201 by way of the orifice 211. This has the effect of generating a vacuum or at least a suction force, which suck-back the product in the dispensing head. This suction force is sufficient to avoid dribbling of the product from the dispensing head. A small amount of product may be drawn into the larger diameter bore 201 but this is unimportant, and the valve member lifts sufficiently to ensure that any product drawn back cannot flow through the orifice 211 when in the closed position.

The described construction of dispensing head is considerably simpler than the known suck-back devices which utilise a piston disposed within a tubular valve member which has to be actuated separately to create the desired suck-back. The known devices are particularly complicated and difficult to assemble correctly by unskilled or semi-skilled operators after cleaning. In contrast the described valve has only the one stepped diameter piston/valve member which serves the desired purpose.

## Claims

1. A depositor for a flowable product comprising a two position valve (37,39,47) which in a first position controls the flow of product from a hopper (53) to a dispensing cylinder (29) and in a second position from the dispensing cylinder (29) to an outlet (46), means (83) for switching the valve - (37,39,47) between the first and second positions, and a plunger disposed in the dispensing cylinder - (29), characterised in that the plunger is reciprocated by a double ended piston and cylinder assembly (13,17,19), one end (17) of the double ended piston (17) being secured to the plunger to actuate same, and the other end (19) carrying actuating means (99) which is co-operable with at least one switch means (101,103) to control at least the stroke of the plunger.

2. A depositor according to claim 1 characterised in that the switch means (103) controlling the stroke of the double ended piston and cylinder assembley (13,17,19) and hence the plunger is mounted on an axially moveable assembly (105).

3. A depositor according to claim 2, characterised in that the axially moveable assembly (105) comprises a nut member (105) carried on two parallel threaded bars (107,109), one of which is rotatable by means of an actuating handle (111) and the other is rotated in synchronism by means of a chain (113) and sprocket drive or gear wheels (115,117).

4. A depositor according to claim 3, characterised in that a resiliently biased friction washer - (120) is carried by one of the threaded bars - (107,109) to serve as an anti-rotation means to locate the switch means (103) in the selected position

5. A depositor according to any preceding claim, characterised in that the actuating means - (99) comprises a circular flange (99) secured to the said other end of the double ended piston (17,19).

6. A depositor according to any preceding claim, characterised in that the means for switching the two position valve (37,39,47) comprises a further piston and cylinder assembly (83,85).

7. A depositor according to claim 6, characterised in that the piston rod (85) of the said further piston and cylinder assembly (83,85) carries an actuating member (93) which is co-operable with trip valve switch means (121,123) synchronising movement of the two position valve (37,39,47), to that of the double ended piston and cylinder assembly (13,17,19).

8. A depositor according to any preceding claim, characterised in that the cylinder (13) of the double ended piston and cylinder assembly - (13,17,19) is located in a way which allows movement relative to a frame (1,3,5) on which it is mounted.

9. A depositor according to claim 8, characterised in that the said cylinder (13) is accommodated within the frame (1,3,5) and the valve body (37) of the two position valve (37,39,47) is carried on one or more mounting members (31) projecting from the frame (1,3,5).

10. A depositor according to any preceding claim, characterised in that an interlock is provided which deactivates the means (83,85) for switching the two position valve (37,39,47) when the hopper - (53) is removed.

11. A depositor according to claim 10, characterised in that the interlock comprises a spring loaded plunger and an associated isolating switch.

12. A dispensing head valve comprising a housing (200) having a stepped diameter bore, which receives slidably therein a stepped diameter valve member (204) which is movable between first and second positions, corresponding t open and closed positions of the valve, characterised in that in the open position an inlet passageway (212) in a small diameter portion of the housing (200) communicates with an outlet passageway (208) in the valve member (204) by way of an orifice (211) in a wall of the valve member (204), and wherein during movement of the valve member (204) to its closed position, the orifice (211) communicates with the larger diameter bore to thereby generate a suction force within the valve.

Fig.1

Fig 2

_Fig 3_

_Fig 4_

Fig 5

## DOCUMENTS CONSIDERED TO BE RELEVANT

EP 86305541.4

| Category | Citation of document with indication, where appropriate, of relevant passages | Relevant to claim | CLASSIFICATION OF THE APPLICATION (Int. Cl.4) |
|---|---|---|---|
| X | FR - A1 - 2 449 626 (SOCIÉTÉ D'ASSISTANCE TECHNIQUE POUR PRODUITS NESTLE SA) <br> * Page 3, line 18 - page 11, line 14 * | 1 | A 23 P 1/00 <br> B 65 B 3/32 <br> B 65 B 37/20 <br> B 65 G 53/46 |
| A | DE - A1 - 2 904 519 (CORAZZA NATALINO) <br> * Claims; fig. * | 1 | |
| A | US - A - 2 032 163 (BAGBY) <br> * Totality * | 1 | |
| A | FR - A - 1 409 184 (J. DE VREE) <br> * Totality * | 1 | |
| A | US - A - 4 254 806 (R.M. ELSWORTH) <br> * Column 2, line 64 - column 9, line 25 * | 1,10 | TECHNICAL FIELDS SEARCHED (Int. Cl.4) <br><br> A 23 P 1/00 <br> B 65 B 3/00 <br> B 65 B 37/00 |
| A | US - A - 4 318 431 (S.D. EVANS) <br> * Fig. 1,4 * | 1,10 | B 65 B 59/00 <br> G 01 F 11/00 <br> B 65 G 25/00 <br> B 65 G 53/00 <br> B 65 G 65/00 |

The present search report has been drawn up for all claims

| Place of search | Date of completion of the search | Examiner |
|---|---|---|
| VIENNA | 28-10-1986 | IRMLER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82